# EUROPÄISCHE PATENTANMELDUNG

(11) **EP 0 705 989 A1**
(43) Veröffentlichungstag der Anmeldung: **10.04.1996**
(21) Anmeldenummer: 95115288.3
(22) Anmeldetag: 28.09.1995
(51) Int. Cl.: F16C 11/00, F16C 11/06

(54) **Gelenkpfanne für ein Winkelgelenk**

(30) Priorität: 29.09.1994 DE 4434787
(71) Anmelder: Robert Sihn GmbH + Co. KG, D-75223 Niefern-Öschelbronn (DE)
(72) Erfinder: Sihn, Robert Dipl.-Ing., D-75223 Niefern-Öschelbronn (DE)
(74) Vertreter: Reinhardt, Harry

(57) **Zusammenfassung**

Eine Gelenkpfanne für ein Winkelgelenk besitzt einen Lagersitz (10) zur Aufnahme eines Drehzapfens, mindestens ein Verriegelungselement (11), das radial zum Lagersitz beweglich ist und in verriegelter Stellung den Drehzapfen hintergreift, und wenigstens einen Verdrängungskörper, der in der verriegelten Stellung in einer im Bereich des Verriegelungselements angeordneten Ausnehmung formschlüssig einfügbar ist. Dadurch, daß der Verdrängungskörper (14a) Teil einer Sicherungseinrichtung (14) zur Sicherung des Drehzapfens im Lagersitz (10) ist, die wenigstens ein gesondertes Sicherungselement (14b) aufweist, das mit dem Verdrängungskörper (14a) verbunden ist und an einer von der Ausnehmung (13) beabstandeten Stelle in der verriegelten Stellung des Verdrängungskörpers (14a) kraftschlüssig festlegbar ist, wird eine Gelenkpfanne aus Kunststoff geschaffen, die den wachsenden Anforderungen an die Langlebigkeit eines Gelenkes genügt.

## Beschreibung

Die Erfindung betrifft eine Gelenkpfanne für ein Winkelgelenk nach dem Oberbegriff des Anspruches 1.

Aus der DE-U 84 20 718 ist eine Gelenkpfanne bekannt, bei der in radial um den Lagersitz geführte Schlitze ein Verdrängungskörper einfügbar ist, der eine elastische Verformung eines Verriegelungselementes verhindert. Dieser Verdrängungskörper besteht dabei aus einem Ring, der Abschnitte unterschiedlichen Innendurchmessers aufweist. Mit dem Ring ebenfalls verbunden sind zwei Verriegelungselemente zur kraftschlüssigen Festlegung des Verdrängungskörpers an der Gelenkpfanne, wobei das Verriegelungsteil an den ringförmigen Verdrängungskörper so angeformt ist, daß im Bereich des Verriegelungsteils weitestgehend der gleiche Innendurchmesser besteht wie in dem Abschnitt des Ringes, der den kleineren Innendurchmesser besitzt. Bei der Montage wird das Verriegelungsteil dann zunächst durch die gleiche Ausnehmung geführt, in die bei der Verriegelung auch der Verdrängungskörper eintaucht. In einer ersten Stellung wird das Verriegelungsteil an der Gelenkpfanne an einer Rastnase so gehalten, daß lediglich der Bereich größeren Innendurchmessers des Rings am Verriegelungselement anliegt. Bei der weiteren Montage taucht dann der Bereich geringeren Innendurchmessers in die Ausnehmung ein, so daß der Drehzapfen nunmehr im Lagersitz verriegelt ist, während er in der ersten Position noch unter Verformung des Verriegelungselements aus der Gelenkpfanne entnommen werden konnte. Gleichzeitig wird die Rastnase des Verriegelungselementes an einem weiteren Vorsprung verriegelt, so daß sich im Bereich des Verriegelungselements und vor allem im Anlagebereich an den Drehzapfen keine formschlüssige Verbindung zwischen Verriegelungselement und Verdrängungskörper ergibt. Erschwerend kommt hinzu, daß auch in dem Bereich, der einen vergrößerten Innendurchmesser zur Ermöglichung einer Herausnahme des Drehzapfens besitzt, sich in verriegelter Stellung ebenfalls ein Hohlraum ausbildet. Diese Hohlräume ergeben in der Praxis jedoch ein Spiel im Gelenk, das zu einem erhöhten Verschleiß beiträgt. Damit ist das Verriegelungsteil zwar nach Montage mit der Gelenkpfanne verbunden, dennoch sind für die Montage mehrere Teile erforderlich, so daß es leicht zum Verlust insbesondere der kleineren Teile kommen kann.

Ferner ist aus der DE-PS 25 12 253 eine Gelenkpfanne bekannt, bei der im Bereich des Lagersitzes ein Verriegelungselement über Schlitze von der restlichen, aus Kunststoff ausgebildeten Gelenkpfanne getrennt ist. Um die Gelenkpfanne mit dem Drehzapfen eines Gelenks zu verbinden, wird der Drehzapfen unter elastischer Verformung des Verriegelungselements in den Lagersitz gepreßt. Anschließend wird in den Schlitz hinter dem Verriegelungsteil ein Verdrängungskörper eingeführt. Der Verdrängungskörper verhindert durch Formschluß ein Ausweichen des Verriegelungselements. Allein durch Pressung in seinem unteren Abschnitt wird der Verdrängungskörper am Herausfallen gehindert. Bei längeren Lastspielen kann es jedoch zu einem Nachlassen der Pressung und damit zu einem Herausfallen des Verdrängungskörpers kommen. Verdrängungskörper und Gelenkzapfen werden zwar einteilig hergestellt, müssen jedoch zur Montage getrennt werden, so daß bei einer später erforderlich werdenden Auflösung der Gelenkverbindung es leicht zum Verlust der Verdrängungskörper kommen kann.

Um den Verdrängungskörper im montierten Endzustand vor Verlust zu sichern, wurde daher vielfach (DE-A 27 12 118, DE-C 31 03 954, EP-B 379 392, DE-U 77 10 300) dazu übergegangen, den Verdrängungskörper kraftschlüssig mit der Gelenkpfanne zu verbinden. Um die hierbei meist erforderliche Verrastung meist hinter dem Verriegelungselement durchführen zu können, ist jedoch ein gewisses Spiel erforderlich, das sich im verriegelten Zustand des Verdrängungskörpers durch ein in der Praxis unerwünschtes Spiel im Gelenk bemerkbar macht, das zudem zu einem erhöhten Verschleiß beiträgt. Diese Lösungen haben darüber hinaus den Nachteil, daß mehrere Teile für die Montage erforderlich sind, so daß es leicht zum Verlust insbesondere der kleineren Teile kommen kann.

Um den Verlust von Teilen bei der Montage zu vermeiden, wurde zudem bereits vielfach vorgeschlagen, Gelenkpfanne und Verdrängungskörper über ein Filmscharnier miteinander zu verbinden (DE-A 19 21 769, DE-C 31 19 061, DE-C 34 22 926). Die bekannten Lösungen haben jedoch den Nachteil, daß sie entweder eine radiale Spaltung des Lagersitzes erforderlich machen (DE-C 34 22 926), oder an einer Stelle angeordnet sind, in deren Richtung die Kraft, insbesondere bei Verwendung im Zusammenhang mit Gasfedern, vordringlich eingeleitet wird (DE-C 31 19 061).

Schließlich ist es noch bekannt, zur Sicherung des Drehzapfens in der Gelenkpfanne Metallbügel (EP-A 308 777) oder Sicherungsringe (EP-A 413 623) zu verwenden, was jedoch einerseits den Nachteil der Mehrteiligkeit mit sich bringt und andererseits zu erhöhtem Verschleiß zwischen Kunststoff und Metall führt.

Ausgehend von diesem Stand der Technik liegt der vorliegenden Erfindung die Aufgabe zugrunde, eine Gelenkpfanne aus Kunststoff herzustellen, die den wachsenden Anforderungen an die Langlebigkeit eines Gelenks genügt.

Diese Aufgabe wird durch die Merkmale des Anspruches 1 gelöst.

Bei dieser Ausbildung ist eine Sicherungseinrichtung vorgesehen, die einerseits das Verriegelungselement durch formschlüssige Einführung eines Verdrängungskörpers so festhält, daß sich eine optimale Spielgenauigkeit des Drehzapfens ergibt, andererseits aber über gesonderte Sicherungselemente verfügt, die eine kraftschlüssige Festlegung der gesamten Sicherungseinrichtung an der Gelenkpfanne ermöglichen. Durch die formschlüssige Verriegelung mittels des Verdrängungskörpers werden geringe Montagekräfte, jedoch große Abzugskräfte erreicht. Die Abzugskräfte können zudem durch die Formgestaltung von Verdrängungskörper in Verbindung mit Verriegelungselement beliebig reguliert werden. Die Sicherungselemente zur kraftschlüssigen Verbindung des Verdrängungskörpers mit der Gelenkpfanne können dabei an einer beliebigen Stelle angeordnet werden, die gegebenenfalls sogar eine unmittelbare Sicht auf die Verbindung ermöglicht. Merkbar rastet das Element bei der Montage ein, so daß eine sichere Gelenkverbindung gewährleistet wird.

Gemäß Anspruch 4 erfolgt die Verriegelung stirnseitig, wodurch im Hauptanwendungsfall beim Einsatz einer Gasfeder z.B. in der Kraftfahrzeugindustrie der Kraftfluß an der dem Verriegelungselement gegenüberliegenden Seite eingeleitet wird. Damit liegt der Verriegelungsmechanismus dort, wo die geringste Kraft eingeleitet wird, so daß sich eine in Schub- als auch in Zugrichtung geschlossene Ausbildung des Lagersitzes für den Drehzapfen ergibt.

Gemäß Anspruch 5 werden Sicherungseinrichtung und Gelenkzapfen einteilig miteinander ausgebildet, wobei das Filmscharnier eine mehrmalige Montage ohne Zerstörung möglich macht. Montageelemente können nun nicht mehr verloren werden, so daß sowohl bei der Montage als auch bei der Demontage den Anforderungen der Industrie genügt ist.

Gemäß Anspruch 6 steht das Verriegelungselement im Anlieferungszustand vom Pfannenkörper vorzugsweise z.B. um 90° ab. Dadurch ist es einerseits leicht zu handhaben, und dem Montagepersonal fällt sofort ins Auge, wenn ein Gelenk nicht verriegelt ist. Die Anordnung am Ende des Gelenkzapfens erlaubt einen ausreichenden Schwenkweg, so daß der Verdrängungskörper dennoch ungefähr senkrecht zur Gelenkpfanne in die entsprechende Ausnehmung eingeführt werden kann.

Bei einer Ausbildung nach Anspruch 8 können zwischen den form- und kraftschlüssig verbundenen Elementen bereits Entriegelungsöffnungen vorgesehen sein, in die handelsübliche Werkzeuge, wie z.B. Schraubenzieher zur Entriegelung der Verbindung eingeführt werden können.

Weitere vorteilhafte Ausbildungen ergeben sich aus den Unteransprüchen.

Im folgenden wird ein Ausführungsbeispiel der Erfindung anhand der Zeichnungen näher erläutert. Es zeigen:

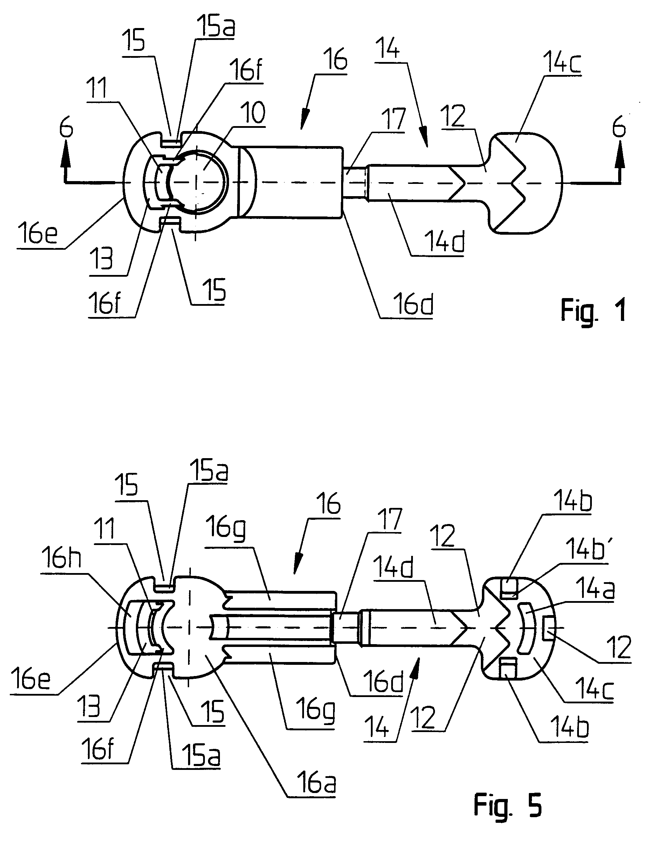

- Fig. 1: Die Gelenkpfanne in einer Ansicht auf den Lagersitz,

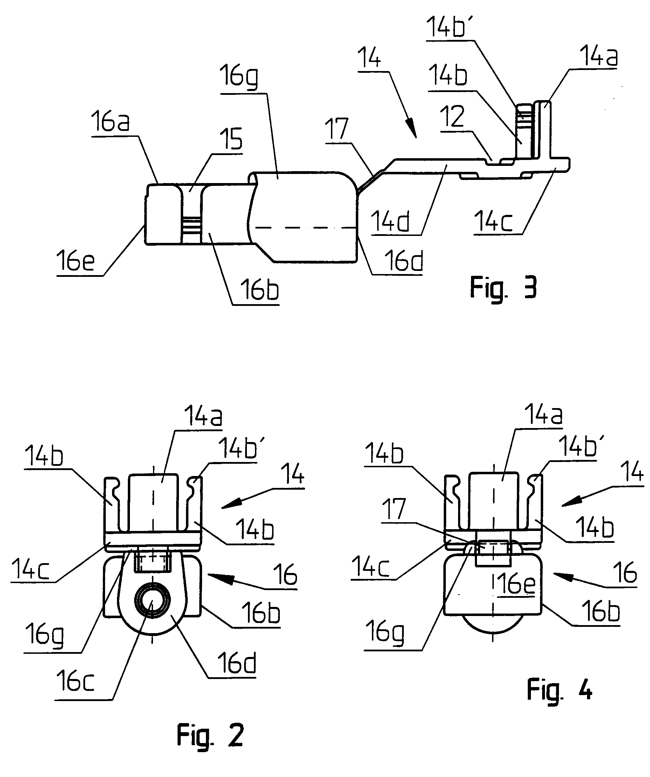

- Fig. 2: die Gelenkpfanne in einer Ansicht in Richtung auf die Aufnahmeöffnung für einen Schaft,
- Fig. 3: die Gelenkpfanne in einer Seitenansicht,
- Fig. 4: die Gelenkpfanne in einer Ansicht von links gemäß Fig. 3,
- Fig. 5: die Gelenkpfanne in einer rückseitigen Ansicht,
- Fig. 6: die Gelenkpfanne in einem vergrößerten Schnitt gemäß Linie 6-6 von Fig. 1,
- Fig. 7: einen vergrößerten Ausschnitt aus Fig. 6 im Bereich des Lagersitzes,
- Fig. 8,9: die Gelenkpfanne in einer Ansicht gemäß Fig 5. bzw. Fig. 3 im verriegelten Zustand.

Die Gelenkpfanne 16 wird für ein Winkelgelenk, insbesondere ein Kugelgelenk eingesetzt. Derartige Winkelgelenke werden vielfach, insbesondere in der Kraftfahrzeugindustrie z.B. im Zusammenhang mit Gasfedern eingesetzt, die z.B. die Öffnung von Kofferraumdeckeln erleichtern sollen. Die Gelenkpfanne 16 ist aus Kunststoff oder dergleichen hergestellt, wobei es lediglich darauf ankommt, daß als Material für die Herstellung ein Material gewählt wird, das über eine ausreichende Elastizität verfügt, um eine dauerhafte Verbindung zwischen der Sicherungseinrichtung 14 und dem Gelenkzapfen 16 zu ermöglichen.

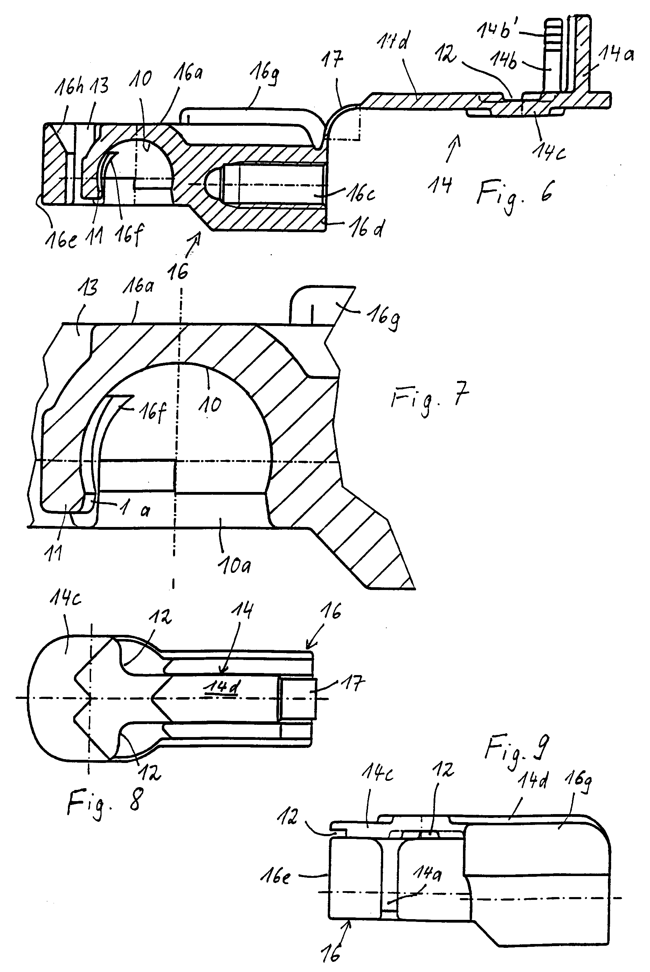

Die Gelenkpfanne besitzt einen Lagersitz 10 zur Aufnahme eines Drehzapfens. Im Bereich des Lagersitzes ist randständig ein Verriegelungselement 11 angeformt, das im verriegelten Zustand am Drehzapfen anliegt und somit einen Teil des Lagersitzes 10 bildet. Wie in Fig. 6 dargestellt, ist das Verriegelungselement lediglich am Grunde des Lagersitzes 10 mit der Gelenkpfanne 16 verbunden. Von allen anderen Seiten ist es entweder über die Ausnehmung 13 oder die Schlitze 16f von der Gelenkpfanne getrennt, um eine elastische Verformung zu ermöglichen. Das Verriegelungselement ist damit radial zum Lagersitz 10 beweglich. Es hintergreift in verriegelter Stellung den Drehzapfen. Aus Richtung des Lagersitzes 10 hinter dem Verriegelungselement oder zumindest im Bereich des Verriegelungselements 11 ist eine Ausnehmung 13 angeordnet, in die ein Verdrängungskörper 14a zur Überführung des Verriegelungselements 11 in die verriegelte Stellung formschlüssig einfügbar ist. Der Verdrängungskörper 14a ist Teil einer Sicherungseinrichtung 14 zur Sicherung des Drehzapfens im Lagersitz 10. Der Verdrängungskörper 14a steht über eine Halteplatte 14c fest in Verbindung mit wenigstens einem gesonderten Sicherungselement 14b; im Ausführungsbeispiel sind zwei Sicherungselemente 14b vorgesehen. Bei der Verriegelung des Verriegelungselements werden auch die Sicherungselemente an einer von der Ausnehmung 13 beabstandeten Stelle am Gelenkzapfen 16 festgelegt. Diese Verbindung erfolgt jedoch kraftschlüssig, um ein unbeabsichtigtes Lösen der Sicherungseinrichtung 14 von der Gelenkpfanne möglichst auszuschließen.

Die Sicherungseinrichtung 14 ist rückseitig, auf der der Eintrittsöffnung 10a für den Drehzapfen gegenüberliegenden Seite 16a der Gelenkpfanne in Ausnehmungen einführbar. Einerseits ist für den Verdrängungskörper 14a hier ein Schlitz als Ausnehmung 13 ausgebildet, andererseits sind außerhalb des Lagersitzes 10 weitere Ausnehmungen 15 für die Sicherungselemente 14b vorgesehen. Die Ausnehmung 13 besitzt in ihrem oberen Bereich eine Einführungsschräge 16h, um die Montage zu erleichtern. Die Sicherungselemente 14b verfügen über Rastnasen 14b', die mit Rastmitteln der äußerlich angeordneten weiteren Ausnehmungen 15 verrasten, wobei die Sicherungselemente 14b im verrasteten Zustand bündig mit der Außenseite 16b der Gelenkpfanne 16 sind.

Das Verriegelungselement wird vorzugsweise dort angeordnet, wo die geringste Kraft auftritt, bei Druckbelastung mit Gasfedern somit meist am stirnseitigen Ende 16e der Gelenkpfanne 16. Die beiden Sicherungselemente 14b verrasten dabei beidseits des Verriegelungselements 11, so daß die kraftschlüssige Verbindung zwar gesondert, aber in der Nähe des Verriegelungselements 11 erfolgt.

Die Sicherungseinrichtung 14 wird einstückig mit der Gelenkpfanne aus Kunststoff gespritzt. Beide Elemente sind miteinander über ein Filmscharnier 17 verbunden, das an einer vom Lagersitz 10 in Richtung auf eine Aufnahmeöffnung 16 für den Anschluß eines Schaftes beabstandeten Stelle an der Gelenkpfanne 16 angeformt ist. Im konkreten Ausführungsbeispiel befindet sich die Sicherungseinrichtung am vom Lagersitz 10 entfernten Ende 16d der Gelenkpfanne. Dadurch ist ein ausreichender Schwenkweg vorhanden, der eine Einführung des Verdrängungskörpers und der Sicherungselemente nahezu senkrecht zur Gelenkpfanne ermöglicht. Über einen Verbindungsabschnitt 14d steht die Halteplatte 14c der Sicherungseinrichtung mit dem Filmscharnier 17 in Verbindung. Im Ausgangszustand steht die Sicherungseinrichtung von der Gelenkpfanne ab. Im dargestellten Ausführungsbeispiel ist hier ein Winkel von 180° vorgesehen, bevorzugt wird jedoch ein Winkel von etwa 90°, da dadurch für das Montagepersonal auf einen Blick erkennbar ist, ob die Sicherungseinrichtung festgelegt ist oder nicht. Um die Abzugskräfte zu erhöhen und die Montage gegenüber der Demontage zu erleichtern, ist der Hintergriff des Verriegelungselements 11 mit Widerhaken 11a versehen. Gemäß Fig. 7 ist dabei der Einführungswinkel flacher als der zum Abziehen zu überwindende Winkel.

Im verriegelten Zustand deckt die Halteplatte 14c die Rückseite der Gelenkpfanne 16 ab. Zwischen Gelenkpfanne 16 und Halteplatte 14c der Sicherungseinrichtung 14 bilden sich dabei Eingriffsöffnungen 12 für den Eingriff eines Werkzeuges zum Entriegeln aus. Ebenfalls auf dieser Rückseite sind Randelemente 16g angeordnet, zwischen denen im verriegelten Zustand das Verbindungselement 14d eintaucht, so daß sich ein geschlossenes Äußeres ergibt.

### Liste der Bezugszeichen (kein Bestandteil der Anmeldungsunterlagen)

- 10: Lagersitz
- 10a: Eintrittsöffnung
- 11: Verriegelungselement
- 11a: Widerhaken
- 12: Eingriffsöffnung
- 13: Ausnehmung für 14a
- 14: Sicherungseinrichtung
- 14a: Verdrängungskörper
- 14b: Sicherungselement
- 14b': Rastnase
- 14c: Halteplatte
- 14d: Verbindungsabschnitt
- 15: weitere Ausnehmung für 14b
- 15a: Rastmittel
- 16: Gelenkpfanne
- 16a: gegenüberliegende Seite zu 10a
- 16b: Außenseite
- 16c: Aufnahmeöffnung
- 16d: Ende
- 16e: stirnseitiges Ende
- 16f: Schlitz
- 16g: Randelement
- 16h: Einführungsschräge
- 17: Filmscharnier

## Patentansprüche

1. Gelenkpfanne (16) für ein Winkelgelenk, insbesondere Kugelgelenk aus Kunststoff mit
- einem Lagersitz (10) zur Aufnahme eines Drehzapfens,
- mindestens einem randständig im Bereich des Lagersitzes (10) angeformten Verriegelungselement (11), das radial zum Lagersitz beweglich ist und in verriegelter Stellung den Drehzapfen hintergreift,
- wenigstens einem Verdrängungskörper (14a), der zur Überführung des Verriegelungselements (11) in die verriegelte Stellung in eine im Bereich des Verriegelungselements angeordnete Ausnehmung (13) einfügbar ist,
- einer Sicherungseinrichtung (14) zur Sicherung des Drehzapfens im Lagersitz (10) ist, die wenigstens ein gesondertes Sicherungselement (14b) aufweist, das mit dem Verdrängungskörper (14a) verbunden ist und an einer von der Ausnehmung (13) beabstandeten Stelle bei verriegelter Stellung des Verdrängungskörpers (14a) kraftschlüssig festlegbar ist,
dadurch gekennzeichnet, daß das Sicherungselement in eine außerhalb des Lagersitzes (10) und vom Lagersitz entfernt angeordnete weitere Ausnehmung (15) einführbar ist und daß der auch funktionell vom Sicherungselement getrennte Verdrängungskörper (14a) in verriegelter Stellung im Bereich des Lagersitzes für den Drehzapfen formschlüssig das Verriegelungselement hintergreift.

2. Gelenkpfanne nach Anspruch 1, dadurch gekennzeichnet, daß die Sicherungseinrichtung (14) rückseitig, auf der der Eintrittsöffnung (10a) für den Drehzapfen gegenüberliegenden Seite (16a) der Gelenkpfanne (16) einführbar ist, wobei der Verdrängungskörper (14a) in einen als Ausnehmung (13) ausgebildeten Schlitz eintaucht.

3. Gelenkpfanne nach Anspruch 1 oder 2, dadurch gekennzeichnet, daß die Sicherungselemente (14b) mit Rastnasen (14b') in Rastmitteln (15a) der weiteren äußerlich angeordneten Ausnehmung (15) verrasten, wobei die Sicherungselemente (14b) im verrasteten Zustand bündig mit der Außenseite (16b) der Gelenkpfanne (16) sind.

4. Gelenkpfanne nach einem der vorhergehenden Ansprüche, dadurch gekennzeichnet, daß das Verriegelungselement am stirnseitigen Ende (16e) der Gelenkpfanne (16) angeordnet ist und zwei Sicherungselemente (14b) beidseits des Verriegelungselements (11) verrasten.

5. Gelenkpfanne nach einem der vorhergehenden Ansprüche, dadurch gekennzeichnet, daß die Sicherungseinrichtung (14) einstückig mit der aus Kunststoff gespritzten Gelenkpfanne (16) ist und mit der Gelenkpfanne (16) über ein Filmscharnier (17) verbunden ist, das an einer vom Lagersitz (10) in Richtung auf eine Aufnahmeöffnung (16c) für den Anschluß eines Schaftes beabstandeten Stelle an der Gelenkpfanne (16) angeformt ist.

6. Gelenkpfanne nach Anspruch 5, dadurch gekennzeichnet, daß die Sicherungseinrichtung (14) im Ausgangszustand um vorzugsweise etwa 90° gegenüber der Gelenkpfanne (16) abgewinkelt am vom Lagersitz (10) entfernten Ende (16d) der Gelenkpfanne (16) angeformt ist.

7. Gelenkpfanne nach einem der vorhergehenden Ansprüche, dadurch gekennzeichnet, daß der Hintergriff des Verriegelungselementes (11) mit Widerhaken (11a) versehen ist.

8. Gelenkpfanne nach einem der vorhergehenden Ansprüche, dadurch gekennzeichnet, daß Verdrängungskörper (14a) und Sicherungselemente (14b) über eine Halteplatte (14c) verbunden sind, die die Rückseite der Gelenkpfanne (16) im verriegelten Zustand abdeckt, wobei sich zwischen Halteplatte (14c) und Gelenkpfanne (16) Eingriffsöffnungen (12) für den Eingriff eines Werkzeugs zum Entriegeln ausbilden.
